# EUROPEAN PATENT SPECIFICATION

(11) **EP 3 395 999 B1**
(45) Date of publication and mention of the grant of the patent: **02.06.2021**
(21) Application number: 16879283.6
(22) Date of filing: 19.12.2016
(51) Int. Cl.: C22C 38/58, C22C 38/50, C22C 38/48, C22C 38/46, C22C 38/44, C22C 38/42, C22C 38/54, C21D 8/02, C21D 6/00, C21D 6/02, C21D 9/46, C22C 38/00, C22C 38/02, C22C 38/04, C22C 38/06, C21D 1/28

(54) **STEEL MATERIAL HAVING EXCELLENT HYDROGEN INDUCED CRACKING (HIC) RESISTANCE FOR PRESSURE VESSEL AND MANUFACTURING METHOD THEREFOR**
STAHLMATERIAL MIT HERVORRAGENDER BESTÄNDIGKEIT GEGEN WASSERSTOFFINDUZIERTE RISSBILDUNG (HIC) FÜR DRUCKBEHÄLTER UND HERSTELLUNGSVERFAHREN DAFÜR
MATÉRIAU EN ACIER AYANT UNE EXCELLENTE RÉSISTANCE À LA FISSURATION PAR L'HYDROGÈNE (HIC) POUR RÉCIPIENT SOUS PRESSION ET PROCÉDÉ DE FABRICATION ASSOCIÉ

(30) Priority: 23.12.2015 KR 20150185500
(43) Date of publication of application: 31.10.2018
(73) Proprietor: POSCO, Nam-gu Pohang-si, Gyeongsangbuk-do 37859 (KR)
(72) Inventor: KIM, Dae-Woo, Pohang-si, Gyeongsangbuk-do 37877 (KR)
(74) Representative: Potter Clarkson
(86) International application number: PCT/KR2016/014903
(87) International publication number: WO 2017/111416

(56) References cited:
- JP-A- 2003 013 175
- JP-A- 2011 001 607
- KR-A- 20110 060 449
- KR-A- 20120 110 324
- KR-A- 20120 110 324
- KR-A- 20130 076 569
- KR-A- 20130 076 569
- KR-B1- 100 723 166
- US-B1- 6 224 689

## Description

### [Technical Field]

The present disclosure relates to a steel material for a pressure vessel, for use in a hydrogen sulfide atmosphere, and more particularly, to a steel material for a pressure vessel having excellent hydrogen-induced cracking (HIC) resistance and a manufacturing method therefor.

### [Background Art]

Recently, in accordance with increases in use times of steel materials for a pressure vessels used in petrochemical production equipment, storage tanks, and the like, the size of individual pieces of equipment has increased, and steel materials for pressure vessels have been thickened, and in order to secure structural stability of a welding zone, together with a base material in manufacturing a large structure, there is a tendency to decrease a carbon equivalent (Ceq) and to carefully control impurities.

Further, due to an increase in the production of crude oil in which a large amount of H₂S is contained, quality properties for hydrogen-induced cracking (HIC) resistance have become stricter.

Particularly, properties for the suppression of cracks occurring due to wet hydrogen sulfide in crude oil are essentially required, even in steel materials used in all types of plant equipment in the extraction, treatment, transportation and storage of low-quality crude oil. Recently, as environmental contamination caused by accidents in plant equipment has become a global problem, and large costs are consumed in restoration, HIC resistance required in a ferritic steel material used the energy industry has gradually become stricter.

Meanwhile, hydrogen-induced cracking (HIC) occurs according to the following principle. As a steel sheet comes into contact with wet hydrogen sulfide contained in crude oil, corrosion occurs, and hydrogen atoms generated by the corrosion infiltrate and diffuse into steel to thereby be present in an atomic state in steel. While the hydrogen atoms in steel as described above are molecularized in the form of hydrogen gas, a gas pressure is generated, brittle cracks occur in a weak structure in steel (for example, an inclusion, a segregation, an internal pore, or the like) due to pressure, and when the cracks gradually grow to exceed endurable strength of a material, breakage occurs.

Therefore, as methods for improving hydrogen-induced cracking resistance of a steel material used in a hydrogen sulfide atmosphere, first, a method for adding an element such as copper (Cu); second, a method for significantly decreasing a hardened structure (for example, a pearlite phase, or the like) in which cracks easily occur and spread or for controlling a shape; third, a method for controlling internal defects such as an inclusion in steel, pores, and the like, which may act as an initiation site of the integration of hydrogen and cracks; and fourth, a method for changing a processing process to make a matrix structure into a hard structure such as tempered martensite, tempered bainite, or the like through a water-treatment such as a normalizing and accelerated cooling and tempering (NACT) treatment, a quenching and tempering (QT) treatment, or a direct quenching and tempering (DQT) treatment to thereby improving resistance against crack initiation may be used.

The method for adding a predetermined amount of Cu has an effect of forming a stable CuS coating film on a surface of a material in a weak acidic atmosphere to decrease infiltration of hydrogen into the material, thereby improving hydrogen-induced cracking resistance.

However, it is known that the effect caused by the addition of Cu as described above is not large in a strong acidic atmosphere, and there is a problem in that the addition of Cu causes high-temperature cracking to generate cracks on a surface of a steel sheet, thereby increasing process costs, such as surface polishing cost, or the like.

Among the above-mentioned methods, the method for significantly decreasing a hardened structure or controlling a shape is a method for lowering a band index (B.I.) value of a band structure generated in a matrix phase after a normalizing heat treatment to delay a crack propagation rate, and a technology related thereto is disclosed in Korean Patent Laid-Open Publication No. 2010-0076727.

A technology capable of manufacturing a steel having a banding index (measured according to ASTM E-1268) of 0.25 or less a microstructure composed of ferrite and pearlite, tensile strength of 500 MPa grade, and excellent HIC resistance (average cracking length ratio (CLR) based on National Association of Corrosion Engineers (NACE) standard: 0) by a process of heating a slab containing, by wt%, 0.1 to 0.30% of C, 0.15 to 0.40% of Si, 0.6 to 1.2% of Mn, 0.035% or less of P, 0.020% of less of S, 0.001 to 0.05% of Al, 0.35% or less of Cr, 0.5% or less of Ni, 0.5% or less of Cu, 0.2% or less of Mo, 0.05% or less of V, 0.05% or less of Nb, 0.0005 to 0.005% of Ca, 0.005 to 0.025% of Ti, and 0.0020-0.0060% of N, hot-rolling the heated slab, air-cooling the hot-rolled slab at room temperature, heating the air-cooled slab at transformation points Ac1 to Ac3, and then slowly cooling the heated slab is disclosed in Korean Patent Laid-Open Publication No. 2010-0076727.

However, in a thin sheet having a thickness of 25mmt or less, a rolling reduction amount is significantly increased from the slab to a final product thickness, and thus, a concentrated Mn layer present in a slab state is lined in a band shape in parallel with a rolling direction after hot-rolling.

Since a structure at a normalizing temperature is composed of an austenite single phase but a shape and a concentration of the concentrated Mn layer are not changed, a band structure of a hard phase is formed again during an air-cooling process after a heat treatment.

The third method is a method for improving HIC resistance by significantly decreasing an inclusion or pores in a slab to increase cleanliness, and a technology related thereto is disclosed in Japanese Patent Laid-Open Publication No. 2014-005534.

A method capable of manufacturing a steel material having excellent HIC resistance in a case of adjusting a Ca content so as to satisfy 0.1(T.[Ca]-(17/18) xT.[O]-1.25×S)/T[O]0.5 at the time of adding Ca to molten steel has been disclosed in Japanese Patent Laid-Open Publication No. 2014-005534.

Since Ca changes a shape of a MnS inclusion capable of acting as a initiation point of hydrogen-induced cracking into a spherical shape and reacts with S in steel to form CaS, HIC resistance may be partially improved, but in a case in which Ca is excessively added or a ratio between Ca and Al₂O₃ is not suitable, particularly, in a case in which a ratio of CaO is high, HIC resistance may be deteriorated. Further, in a case of the thin sheet, a coarse oxide inclusion may be broken depending on a composition and a shape of an inclusion due to a high accumulative rolling reduction amount to thereby be finally dispersed to be elongated in a rolling direction. Here, a distal end of the dispersed inclusion is a portion in which a degree of stress concentration is significantly high due to a high hydrogen partial pressure, HIC resistance is deteriorated.

The fourth method is a method for improving strength of a matrix phase by performing a processing process through water-treatment such as a normalizing and accelerated cooling and tempering (NACT) treatment, a quenching and tempering (QT) treatment, a direct quenching and tempering (DQT) treatment, a thermo-mechanical controlled processing (TMCP) treatment, or the like instead of normalizing heat treatment to allow the matrix phase to form tempered bainite, tempered martensite, or a composite structure thereof rather than ferrite + pearlite. Since resistance against crack initiation is increased in a case in which strength of the matrix phase is increased, a crack occurrence frequency may be decreased.

Technologies related thereto are disclosed in Japanese Patent Laid-Open Publication No. 2003-013175 and Korean Patent Application No. 2006-0127482. In Japanese Patent Laid-Open Publication No. 2003-013175, a method capable of improving HIC resistance by a process of heating a slab composed of, by mass%, 0.01 to 0.1% of C, 0.01 to 0.5% of Si, 0.8 to 2% of Mn, 0.025% or less of P, 0.002% or less of S, 0.0005 to 0.005% of Ca, 0.005 to 0.05% of Ti, 0.005 to 0.1% of Nb, 0.005 to 0.05% of Sol.Al, 0.01% of N, 0.2% of V, 0.5% or less of Cu, 0.5% or less of Ni, 3% or less of Cr, 1.5% or less of Mo, and 0.002% or less of B, performing the finish rolling thereon at 700°C to 850°C, and initiating the accelerated cooling at Ar3 and a temperature of 30°C or less to finish the process at 350 to 550°C is disclosed.

Further, in Korean Patent Application No. 2006-127482, a method capable of improving HIC resistance by securing a tempered martensite structure through a direct quenching and temperature process is disclosed.

However, when a matrix phase is composed of a low-temperature phase (martensite, bainite, acicular ferrite, or the like) , HIC resistance may be improved, but there may be problems in that hot-forming is impossible, such that there is a difficulty in making a pressure vessel pipe, a uniform elongation value of a product is decreased due to a high surface hardness value, and a surface crack occurrence rate is increased during a processing process.

Therefore, the above-mentioned methods according to the related art have a limitation in manufacturing molten steel for a pressure vessel having hydrogen-induced cracking resistance using a steel material having a thickness of 25mm and tensile strength of 500 MPa grade.

Also, KR 2013 0076569 A disclose a steel material and associated method of manufacture in which the steel material comprises, by wt, C: 0.03 to 0.18%, Mn: 0.5 to 2.0%, Al: 0.005 to 0.1%, Cu: 0.15 to 0.5%, Ni: 0.15 to 1.0%, Nb: 0.01 to 0.05%, Ti, 0.01 to 0.05%, Ca: 0.001 to 0.003%, N: 0.001 to 0.01%, P: 0.012% or less, S: 0.0015% or less, C/Mn: 0.04 to 0.16%, ((Nb+Ti+V)*0.1)/(C*0.01+N): 0.4 to 1.6%, and the remainder Fe and unavoidable impurities.

### [Disclosure]

### [Technical Problem]

An aspect of the present disclosure is to provide a steel material for a pressure vessel having excellent hydrogen-induced cracking (HIC) resistance in a hydrogen sulfide atmosphere while having excellent formability and high strength by optimizing a component composition and manufacturing conditions of steel.

An aspect of the present disclosure is to provide a manufacturing method for a steel material for a pressure vessel having excellent hydrogen-induced cracking (HIC) resistance in a hydrogen sulfide atmosphere while having excellent formability and high strength.

### [Technical Solution]

According to an aspect of the present disclosure, a steel material for a pressure vessel having excellent hydrogen-induced cracking (HIC) resistance contains, by wt%: 0.10 to 0.25% of carbon (C); 0.05 to 0.50% of silicon (Si); 1.0 to 2.0% of manganese (Mn); 0.005 to 0.1% of aluminum (Al) ; 0.010% or less of phosphorous (P); 0.0015% or less of sulfur (S); 30 to 70 ppm of nitrogen (N); 0.001 to 0.03% of titanium (Ti); 0.02 to 0.50% of copper (Cu); 0.05 to 0.50% of nickel (Ni); 0.0005 to 0.0040% of calcium (Ca); 0.001 to 0.03% of niobium (Nb); 0.001 to 0.03% of vanadium (V); one or two of 0.01 to 0.20% of chromium (Cr) and 0.05 to 0.15% of molybdenum (Mo); optionally 0.0001 to 0.0020% of B; and the balance being Fe and other unavoidable impurities,
wherein a microstructure of the steel material contains at least 40 vol% of upper bainite and granular bainite, and the balance being ferrite, and Nb(C,N) carbonitrides having a diameter of 5 to 30 nm are contained in the steel material in a content of 0.01 wt% or more, and wherein in the microstructure of the steel material, ferrite is partially replaced with pearlite.

The pearlite may preferably contain spheroidized cementite in a content of 3 wt% or less.

A thickness of the steel material may be 5mm or more to 25mm or less.

A content of the Nb(C,N) carbonitrides having a diameter of 5 to 30nm may be 0.01 to 0.02 wt%.

According to another aspect of the present disclosure, a manufacturing method for a steel material for a pressure vessel having excellent hydrogen-induced cracking (HIC) resistance, includes: reheating a slab comprising, by wt%, 0.10 to 0.25% of carbon (C), 0.05 to 0.50% of silicon (Si), 1.0 to 2.0% of manganese (Mn), 0.005 to 0.1% of aluminum (Al), 0.010% or less of phosphorous (P), 0.0015% or less of sulfur (S), 30 to 70 ppm of nitrogen (N), 0.001 to 0.03% of titanium (Ti), 0.02 to 0.50% of copper (Cu), 0.05 to 0.50% of nickel (Ni), 0.0005 to 0.0040% of calcium (Ca), 0.001 to 0.03% of niobium (Nb), 0.001 to 0.03% of vanadium (V), one or two of 0.01 to 0.20% of chromium (Cr) and 0.05 to 0.15% of molybdenum (Mo), optionally 0.0001 to 0.0020% of B, and the balance being Fe and other unavoidable impurities at 1150°C to 1300°C; sizing-rolling the reheated slab at 1100°C to 1130°C to obtain a bar having a thickness of 40 to 120mm; air-cooling the obtained bar to room temperature after the sizing rolling; heating the bar again at 1150°C to 1200°C after the air-cooling; finish hot-rolling the heated bar at 1000°C to 1050°C to form a hot-rolled steel sheet having a thickness of 5 to 25mm; air-cooling the hot-rolled steel sheet to room temperature after the finish hot-rolling; and a normalizing heat treatment process of heating the hot-rolled steel sheet at 930°C to 1000°C for 40 to 60 minutes after the air-cooling and then air-cooling the heated hot-rolled steel sheet to room temperature.

After the sizing rolling, an austenite grain size may be at least 100µm or more.

A finish rolling termination temperature may be equal to or higher than a recrystallization temperature + 20°C.

At the time of finish rolling, a rolling reduction ratio may be set so that a ratio between a thickness (mm) of the slab and a thickness of the steel sheet after finish rolling is 20 or less.

During the normalizing heat treatment process, the steel sheet may be air-cooled at 0.1°C to 5°C/s based on a central portion of thereof.

The manufacturing method may further include, multilayer-stacking, and cooling the steel sheet from a temperature of 200°C or more to room temperature, before the normalizing heat treatment process and after the finishing rolling, in a case in which an amount of dissolved hydrogen in molten steel is 1.3ppm or more in a manufacturing process for manufacturing the steel slab.

During the time of performing secondary heat treatment on the steel material, 0.01 wt% or more of V(C,N) carbonitrides having a diameter of 5 to 30nm may be formed.

A content of the V(C,N) carbonitrides having a diameter of 5 to 30nm may be 0.01 to 0.02 wt%.

It should be noted that all features of the present disclosure are not disclosed in the technical solution described above, but the various features of the present invention and the advantages and effects of the present invention can be understood in more detail with reference to the following specific embodiments.

### [Advantageous Effects]

As set forth above, according to an exemplary embodiment in the present disclosure, a steel material for a pressure vessel having excellent hydrogen-induced cracking (HIC) resistance may be obtained.

### [Description of Drawings]

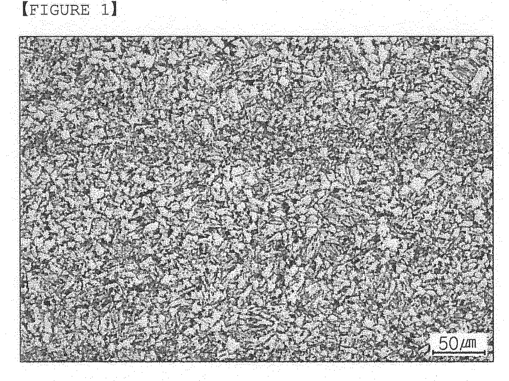

FIG. 1 is a photograph obtained by observing a central portion of steel according to the present disclosure in a thickness direction using an optical microscope.

### [Best Mode for Invention]

The present inventors conducted research and experiments in order to provide a steel material capable of having excellent strength and hydrogen-induced cracking resistance to thereby be suitably used to purify, transport, and store crude oil, and the like, thereby suggesting the present disclosure based on results thereof.

The present disclosure relates to a thin steel material of which strength and hydrogen-induced cracking resistance are further improved by controlling an alloy composition, a structure, and manufacturing conditions of the steel material.

Main concepts of the present disclosure are as follows.
1) The main concept of the present disclosure is to form a microstructure containing air-cooled bainite.
   Hydrogen-induced cracking (HIC) resistance in a hydrogen sulfide atmosphere as well as excellent hot formability and high strength may be improved by forming the microstructure containing air-cooled bainite.
   In order to form the air-cooled bainite, sizing rolling, finish hot-rolling and normalizing conditions may be organically and suitably controlled.
   Main requirements at the time of sizing rolling may be a sizing finish temperature and a final thickness of a bar, a main requirement at the time of hot-rolling is a hot-rolling finish temperature, and a main requirement at the time of normalizing is a normalizing temperature.
2) In order to improve strength through solid-solution strengthening, an alloy composition of steel may be suitably controlled. For example, contents of Mn, Ni, Mo, Cu, and Si having a high solid solution strengthening effect in ferrite may be optimized.
3) In order to improve strength, prevent a decrease in strength and improve toughness after post weld heat treatment (PWHT), through precipitation strengthening, an alloy composition of steel may be suitably controlled. For example, contents of C, Nb, and V may be optimized. Carbonitrides such as Nb (C,N) and V (C, N) may be formed by optimizing a composition of steel as described above, such that strength and toughness may be improved even after PWHT.
4) In order to improve a fraction of air-cooled bainite structure after normalizing, an alloy composition of steel may be suitably controlled. For example, in order to improve hardenability, contents of Mn, Ni, and V may be optimized. The bainite structure as well as a ferrite structure may be secured up to a central portion during an air-cooling of a thin sheet having a thickness of 25 mm or less by improving hardenability as described above.
5) In order to prevent breakage of a rolling oxide inclusion, finish rolling condition may be controlled. For example, a finish rolling temperature and rolling reduction conditions may be controlled, which may induce to prevent stress from being concentrated on a notch portion of the inclusion by hydrogen partial pressure.

Hereinafter, a steel material for a pressure vessel having excellent hydrogen-induced cracking (HIC) resistance according to an aspect of the present disclosure will be described in detail.

According to an aspect of the present disclosure, a steel material for a pressure vessel having excellent hydrogen-induced cracking (HIC) resistance may contain, by wt%: 0.10 to 0.25% of carbon (C); 0.05 to 0.50% of silicon (Si); 1.0 to 2.0% of manganese (Mn); 0.005 to 0.1% of aluminum (Al) ; 0.010% or less of phosphorous (P); 0.0015% or less of sulfur (S); 30 to 70 ppm of nitrogen (N); 0.001 to 0.03% of titanium (Ti); 0.02 to 0.50% of copper (Cu); 0.05 to 0.50% of nickel (Ni); 0.0005 to 0.0040% of calcium (Ca) ; 0.001 to 0.03% of niobium (Nb) ; 0.001 to 0.03% of vanadium (V) ; one or two of 0.01 to 0.20% of chromium (Cr) and 0.05 to 0.15% of molybdenum (Mo) ; and the balance being Fe and other unavoidable impurities, wherein a microstructure of the steel material contains at least 40 vol% of air-cooled bainite, and the balance being ferrite, and Nb(C,N) carbonitrides having a diameter of 5 to 30 nm are contained in the steel material in a content of 0.01 wt% or more.

Hereinafter, a steel component and a steel component range according to the present disclosure will be described.

### Carbon (C): 0.10 to 0.25 wt% (hereinafter, referred to as "%")

Since C is the most important element in securing basic strength, C needs to be contained in steel in a suitable range, and in order to obtain this addition element, C may be preferably add in a content of 0.10% or more.

However, when a content of C is more than 0.25%, a degree of segregation in a central portion may be increased, and strength or hardness may be excessive due to a martensite or martensite-austenite phase rather than a ferrite + bainite structure during an air-cooling process. Particularly, since at the time of forming a martensite-austenite (MA) structure, HIC resistance may also be deteriorated, the content of carbon may be limited to preferably 0.10 to 0.25%, more preferably 0.10 to 0.20%, and further more preferably 0.10 to 0.15%.

### Silicon (Si): 0.05 to 0.50%

Since Si, which is a substitutional element, improves strength of the steel material through solid solution strengthening and a strong deoxidation effect, Si is an essential element in manufacturing clean steel, such that Si may be preferably contained in a content of 0.05% or more.

However, at the time of adding an excessive amount of silicon, since silicon may form a martensite-austenite (MA) phase and excessively increase strength of a ferrite matrix to deteriorate HIC resistance, impact toughness, and the like, an upper limit of the content of silicon may be preferably limited to 0.5%. The upper limit of the content of silicon may be more preferably limited to 0.05 to 0.40% and further more preferably 0.20 to 0.35%.

### Manganese (Mn): 1.0% to 2.0%

Mn may be a useful element improving strength by solid solution strengthening and in improving hardenability so as to form a low-temperature transformation phase. Further, since Mn may form the low-temperature transformation phase at a slow cooling rate due to improvement of hardenability, Mn is an important element for securing a low-temperature bainite phase at the time of air-cooling after normalizing heat treatment.

Therefore, Mn may be preferably added in a content of 1.0% or more. However, when the content of Mn is more than 2.0%, central segregation may be increased, and a fraction of a MnS inclusion formed together with S is increased, such that hydrogen-induced cracking resistance may be deteriorated due to formation of the inclusion.

Therefore, the content of Mn is limited to preferably 1.0 to 2.0%, more preferably 1.0 to 1.7%, and further more preferably 1.0 to 1.5%.

### Aluminum (Al): 0.005 to 0.1%

Al is one of strong deoxidizing agent together with Si in a steel manufacturing process, and in order to obtain this effect, Al may be preferably added in a content of 0.005% or more. However, when the content of added Al is more than 0.1%, a fraction of Al₂O₃ in an oxide inclusion formed as resultants of deoxidation may be excessively increased, such that the oxide inclusion may become coarse, and it may be difficult to remove the oxide inclusion. Therefore, there is a problem in that hydrogen-induced cracking resistance may be deteriorated by the oxide inclusion.

Therefore, the content of Al according to the present disclosure is limited to preferably 0.005 to 0.1%, more preferably 0.01 to 0.05%, and further more preferably 0.01 to 0.035%.

### P: 0.010% (100ppm) or less, S: 0.0015% (15ppm) or less

P and S are elements causing brittleness at grain boundaries or forming coarse inclusions to induce brittleness. In order to improve brittle crack propagation resistance, a content of P may be preferably limited to 100ppm or less and a content of S may be preferably limited to 15ppm.

### Nitrogen (Ni): 30 to 70ppm

A content of nitrogen may be preferably limited to 30 to 70ppm.

When the content of nitrogen is less than 30ppm, carbonitrides such as NbCN or VCN may not be sufficiently formed, such that an increase in strength due to precipitation strengthening may not be expected, and when the content of nitrogen is more than 70ppm, impact toughness may be deteriorated due to solid solution strengthening caused by N itself, and there is a risk that surface cracks will occur in a product due to formation of AlN.

### Titanium (Ti): 0.001 to 0.03%

Ti is a component precipitated as TiN at the time of reheating to suppress growth of crystal grains of a base material and a weld heat affected zone to thus significantly improve low-temperature toughness. In order to obtain this addition effect, Ti may be preferably added in a content of 0.001% or more.

However, when the content of added Ti is more than 0.03%, a continuous casting nozzle may be clogged, or low-temperature toughness may be deteriorated by crystallization in a central portion, and in a case in which Ti is bound to N to form a coarse TiN precipitate in a central portion in a thickness direction, the coarse TiN precipitate may act as an initiation site of hydrogen-induced cracking. Therefore, the content of Ti may be preferably limited to 0.001 to 0.03%.

The content of Ti may be limited to more preferably 0.011 to 0.025% and further more preferably 0.013 to 0.018%.

### Copper (Cu): 0.02 to 0.50%

Since copper (Cu) may significantly improve strength of a matrix phase by solid solution strengthening in ferrite and have an effect of suppressing corrosion in a wet hydrogen sulfide atmosphere, copper (Cu) may be an advantageous element in the present disclosure.

In order to obtain the above-mentioned effect, there is a need to add Cu in a content of 0.02% or more, but when the content is increased to more than 0.50%, it is highly likely to generate star cracks on a surface of a steel sheet, and Cu is an expensive element, thereby increasing a cost. Therefore, in the present disclosure, the content of Cu may be limited to preferably 0.02 to 0.50%, more preferably 0.02 to 0.35%, and further more preferably 0.02 to 0.25%.

### Nickel (Ni): 0.05 to 0.50%

Nickel (Ni) is an important element in increasing stacking fault energy to facilitate cross slip of dislocation to improve impact toughness and in improving hardenability to improve strength. In order to obtain this effect, nickel (Ni) may be preferably added in a content of 0.05% or more.

However, when the content of added Ni is more than 0.5%, hardenability may be excessively increased, and since Ni is relatively expensive as compared to other hardenable elements, a manufacturing cost may also be increased. Therefore, an upper limit of the content of Ni may be limited to preferably 0.50%, and the content of Ni may be limited to more preferably 0.05 to 0.40% and further more preferably 0.05 to 0.30%.

### Calcium (Ca): 0.0005 to 0.0040%

In a case of adding calcium after deoxidation by Al, Ca is bound to S forming a MnS inclusion to suppress formation of MnS, and at the same time, Ca has an effect of forming spherical CaS to suppress crack from occurring by hydrogen-induced cracking.

In the present disclosure, in order to form sufficient CaS from S contained as impurities, Ca may be preferably added in a content of 0.0005% or more, but when an addition amount of Ca is excessively large, Ca remaining after forming CaS is bound to O to form a coarse oxide inclusion, and this coarse oxide inclusion may be stretched and broken at the time of rolling, thereby promoting hydrogen-induced cracking.

Therefore, in the present disclosure, the content of Ca is preferably limited to 0.0005 to 0.0040%.

### Niobium (Nb): 0.001 to 0.03%

Nb is precipitated in a form of NbC or NbCN to improve strength of a base material.

Further, at the time of reheating at a high temperature, solid-dissolved Nb is significantly finely precipitated in a form of NbC to suppress recrystallization of austenite, thereby having an effect of refining a structure.

Therefore, Nb may be preferably added in a content of 0.001% or more, but when Nb is excessively added, un-dissolved Nb is formed in a form of TiNb(C,N), which causes impact toughness degradation and hydrogen-induced cracking resistance. Therefore, an upper limit of the content of Nb may be preferably limited to 0.03%.

The content of Nb may be limited to more preferably 0.005 to 0.02% and further more preferably 0.007 to 0.015%.

### Vanadium (V): 0.001 to 0.03%

V is almost solid-dissolved again at the time of reheating, such that at the time of subsequent rolling, an effect of improving strength by precipitation or solid-solution is insufficient, but V is precipitated as significantly fine carbonitride in a subsequent heat treatment process such as PWHT, thereby having an effect of improving strength. Further, V has an effect of increasing a fraction of hardenability of austenite after normalizing to increase a fraction of air-cooled bainite.

In order to sufficiently obtain this effect, there is a need to add V in a content of 0.001% or more, but when the content of V is more than 0.03%, strength and hardness of a welded zone are excessively increased, which may serve as a cause of surface cracks at the time of processing a pressure vessel, or the like. Further, at the time of adding V in a content of 0.03% or more, a manufacturing cost may be significantly increased, which is economically disadvantageous.

Therefore, in the present invention, the content of V may be limited to preferably, 0.001 to 0.03%, more preferably 0.005 to 0.02%, and further more preferably 0.007 to 0.015%.

### Chromium (Cr): 0.01 to 0.20%

Chromium (Cr) is not effective in increasing yield strength and tensile strength by solid solution but is effective in preventing a decrease in strength by lowering a decomposition rate of cementite during subsequent tempering or heat-treatment after welding.

In order to obtain the above-mentioned effect, Cr may be preferably added in a content of 0.01% or more, but when the content of Cr is more than 0.2%, a size and a fraction of Cr-rich coarse carbide such as M₂₃C₆ may be increased, such that impact toughness may be significantly deteriorated, manufacturing cost may be increased, and weldability may be deteriorated, which is not preferable.

### Molybdenum (Mo): 0.05 to 0.15%

Molybdenum (Mo), which is an element effective in preventing a decrease in strength during tempering or heat treatment after welding, similarly to Cr, has an effect of preventing toughness from being deteriorated by grain boundary segregation of impurities such as P. Further, molybdenum, a solid solution strengthening element in ferrite, increase strength of a matrix phase.

In order to obtain the above-mentioned effect, Mo may be preferably added in a content of 0.05% or more, but since Mo also is an expensive element, when Mo is excessively added, manufacturing cost may be significantly increase. Accordingly, Mo may be preferably added in a content of 0.15% or less. Therefore, in the present disclosure, the content of Mo may be preferably limited to 0.05 to 0.15%.

The steel material may further contain 0.0001 to 0.0020% of B.

B may be added in a content of 0.0001 to 0.0020% (by wt%) in order to improve hardenability at the time of air-cooling in normalizing heat treatment. Preferably, B may be added in a content of 0.0003 to 0.0015%, and more preferably, B may be added in a content of 0.0003 to 0.0010%.

According to the present disclosure, a balance may be iron (Fe) .

However, in a common manufacturing process, unintended impurities may be inevitably incorporated from raw materials or surrounding environments, so that they may not be excluded.

Since these impurities are commonly known to those skilled in the art, and all contents thereof are not specifically mentioned in this specification.

A microstructure of the steel material contains at least 40 vol% of air-cooled bainite and the balance being ferrite.

The air-cooled bainite may improve resistance against crack initiation while having excellent formability and high strength, thereby improving hydrogen-induced cracking (HIC) resistance in a hydrogen sulfide atmosphere.

Here, the air-cooled bainite is a structure obtained in a process capable of forming bainite even at an air-cooling rate by artificially increasing an austenite grain size to shift a ferrite formation node backward in a continuous cooling transformation (CCT) diagram (that is, to improve hardenability), and is morphologically the same as upper bainite.

When the fraction of air-cooled bainite is less than 40 vol%, a fraction of pearlite in the balance may be increased, and even though a band structure with a long range is not generated, a local band shaped segregation band may be formed to have a negative influence on hydrogen-induced cracking resistance. Therefore, the fraction of air-cooled bainite is 40 vol% or more. An upper limit of the fraction of the air-cooled bainite is not particularly limited, but may be 100 vol%.

The balance, ferrite means polygonal ferrite, and bainite may be preferably upper bainite and granular bainite.

In the microstructure of the steel material, ferrite may be partially replaced with pearlite.

At the time of replacement with pearlite, it is preferable to prevent pearlite from being formed in a band shape.

The replaced pearlite may preferably contain spheroidized cementite in a content of 3 wt% or less.

When the content of the spheroidized cementite is 3 wt% or more, the spheroidized cementite itself may serve as a crack initiation site to deteriorate impact toughness.

In a case in which the microstructure partially contains pearlite as well as air-cooled bainite and ferrite, when cementite is present in a plate shape in pearlite after secondary heat treatment such as stress relieving heat treatment or PWHT heat treatment, cementite may serve as an initiation portion of hydrogen-induced cracking. Therefore, preferably, cementite may be present mostly in a spheroidized form.

A thickness of the steel material may be 5mm to 25mm, preferably 5 to 20mm, and more preferably 5 to 16mm.

The steel material contains Nb(C,N) carbonitrides having a diameter of 5 to 30nm in a content of 0.01 wt% or more.

For example, at the time of performing secondary heat treatment such as stress relieving heat treatment or PWHT heat treatment on the steel material, 0.01 wt% or more of V(C,N) carbonitrides having a diameter of 5 to 30nm may be formed.

When the content of Nb(C,N) carbonitrides or V(C,N) carbonitrides is less than 0.01 wt%, there may be no problem in securing strength as-normalized, but since after secondary heat treatment such as stress relieving heat treatment or PWHT heat treatment, dislocation density formed at the time of bainite phase transformation may be decreased, and recrystallization of bainite may occur, strength may be significantly decreased.

Since these carbonitrides may prevent a decrease in strength by hindering interface movement of air-cooled bainite at the time of heat treatment, the content of Nb(C,N) carbonitrides is 0.01 wt% or more. V(C,N) carbonitrides may be preferably maintained in a range of 0.01 wt% or more.

A content of Nb(C,N) carbonitrides having a diameter of 5 to 30nm may be 0.01 to 0.02 wt%.

A content of V(C,N) carbonitrides having a diameter of 5 to 30nm may be 0.01 to 0.02 wt%.

The steel material may have tensile strength of 500MPa or more.

Hereinafter, a manufacturing method for a steel material for a pressure vessel having excellent hydrogen-induced cracking (HIC) resistance according to another aspect of the present disclosure will be described in detail.

The manufacturing method for a steel material for a pressure vessel having excellent hydrogen-induced cracking (HIC) resistance according to another aspect of the present disclosure may include: reheating a slab containing, by wt%, 0.10 to 0.25% of carbon (C), 0.05 to 0.50% of silicon (Si), 1.0 to 2.0% of manganese (Mn), 0.005 to 0.1% of aluminum (Al) , 0.010% or less of phosphorous (P), 0.0015% or less of sulfur (S), 30 to 70 ppm of nitrogen (N), 0.001 to 0.03% of titanium (Ti), 0.02 to 0.50% of copper (Cu), 0.05 to 0.50% of nickel (Ni), 0.0005 to 0.0040% of calcium (Ca), 0.001 to 0.03% of niobium (Nb), 0.001 to 0.03% of vanadium (V), one or two of 0.01 to 0.20% of chromium (Cr) and 0.05 to 0.15% of molybdenum (Mo), optionally 0.0001 to 0.0020% of B and the balance being Fe and other unavoidable impurities at 1150°C to 1300°C; sizing-rolling the reheated slab at 1100°C to 1130°C to obtain a bar having a thickness of 40 to 120mm; air-cooling the obtained bar to room temperature after the sizing rolling; heating the bar again at 1150°C to 1200°C after the air-cooling; finish hot-rolling the heated bar at 1000°C to 1050°C to form a hot-rolled steel sheet having a thickness of 5 to 25mm; air-cooling the hot-rolled steel sheet to room temperature after the finish hot-rolling; and a normalizing heat treatment process of heating the hot-rolled steel sheet at 930°C to 1000°C for 40 to 60 minutes after the air-cooling and then air-cooling the heated hot-rolled steel sheet to room temperature.

### Heating of Slab

A temperature at the time of heating the slab before rough rolling may be preferably 1150 or more. This is, first, to allow carbonitrides of Ti or Nb, coarse TiNb(C,N) crystallized products, or the like, formed during casting to be solid-dissolved again, and second, to significantly increasing an austenite grain size by heating and maintaining austenite at a temperature equal to or higher than a recrystallization temperature after the sizing rolling. However, in a case in which heating the slab at an excessively high temperature, problems may occur due to an oxidation scale at the high temperature, and manufacturing cost may be excessively increased due to an increase in cost caused by heating and maintenance. Therefore, an upper limit of the heating temperature of the slab may be preferably 1300°C.

### Sizing Rolling and Cooling

After sizing rolling the slab to obtain the bar, the bar is air-cooled to room temperature.

The sizing rolling is to weaken formation of a band structure due to an increase in reduction ratio at the time of finish hot-rolling and to increase the austenite grain size to thereby increase a fraction of air-cooled bainite at the time of subsequent normalizing heat treatment corresponding to a final process. Further, at the time of finish hot-rolling without the sizing rolling, the oxide inclusion may be broken due to a cumulative reduction amount in a non-recrystallized region to thereby act as an initiation site of hydrogen-induced cracking. Therefore, a rolling termination temperature in the sizing rolling may be preferably 1100°C or more. However, considering a cooling rate in the air, a rolling threading speed, and the like, in the obtaining the bar having a thickness of 40 to 120mm, which is an intermediate target of intermediate rolling, a sizing rolling temperature is 1100°C to 1130°C.

The austenite grain size after the sizing rolling may be at least 100µm or more, preferably 130µm or more, and more preferably 150µm or more, and suitably adjusted depending on the desired strength and HIC resistance.

When the thickness of the bar after terminating the sizing rolling is 120mm or more, since a ratio of a thickness of a final steel sheet to a thickness of the bar at the time of finish rolling is increased and thus, a rolling reduction ratio is increased, a possibility of finish rolling in the non-recrystallization region may be increased.

When the rolling reduction amount in the non-recrystallization region is increased, the austenite grain size before normalizing may be increased. For example, in a case in which a diameter of an austenite grain is 15µm or less, since an air-cooled bainite structure may not be sufficiently secured in a normal process at the time of normalizing, hydrogen-induced cracking resistance may be deteriorated.

The thickness of the bar after terminating the sizing rolling may be preferably 40 to 120mm, more preferably 40 to 100mm, and further more preferably 40 to 60mm.

### Reheating of Bar

After the air-cooling, the bar is heated again at 1150°C to 1200°C.

At the time of reheating the bar (40 to 120mm) in an intermediate rolling state before finish hot-rolling, a temperature may be preferably 1150°C or more. This is to perform the rolling at a temperature equal to or higher than the recrystallization temperature so that grain refinement does not proceed at the time of finish rolling. However, when a reheating temperature is excessively high, a growth rate of precipitate phase such as TiN formed at a high temperature may be increased. Therefore, the reheating temperature may be preferably 1200°C or less.

### Finish Hot-Rolling and Cooling

After the heated bar is subjected to finish hot-rolling at 1000°C to 1050°C to form a hot-rolled steel sheet having a thickness of 5 to 25mm, the hot-rolled steel sheet may be air-cooled to room temperature.

The hot-rolled steel sheet having a final thickness of 5mm to 25mm may be obtained by finish rolling the sizing rolled bar as described above at a temperature at which grain growth occurs.

Similarly to the sizing rolling, since the lower the rolling temperature, the stronger the strength of the steel sheet, a coarse complex inclusion formed in a refining process needs to accommodate deformation due to rolling, and thus, the coarse complex inclusion may be broken or segmented into small inclusions. Alternatively, an inclusion such as MnS is elongated to be long.

Since the elongated or segmented inclusion as described above is a direct cause of hydrogen-induced cracking occurrence and propagation, the finish rolling may be terminated at a temperature equal to or higher than the recrystallization temperature + 20°C, preferably, recrystallization temperature + 30°C, and more preferably the recrystallization temperature + 40°C.

At the time of finish rolling, the rolling reduction ratio may be set so that a ratio between a thickness (mm) of the slab and a thickness of the steel sheet after finish rolling is 20 or less, preferably 15 or less, and more preferably 10 or less.

Similarly to a case of adjusting the thickness of the bar after sizing rolling, in a case of adjusting the rolling reduction ratio after finish rolling, by actively changing a fraction ratio of a two-phase structure of ferrite and air-cooled bainite or a three-phase structure of ferrite, air-cooled bainite, and pearlite, there are advantages in improving yield strength and tensile strength, impact toughness, elongation in a thickness direction (ZRA), bendability, elongation quality even after performing secondary heat treatment such as stress relieving heat treatment or PWHT heat treatment.

A thickness of the final steel sheet after finish rolling may be 5mm to 25mm, preferably 5 to 20mm, and more preferably 5 to 16mm.

### Heat Treatment

A steel material having physical properties to be desired may be manufactured by performing normalizing heat treatment on the hot-rolled steel sheet manufactured as described above.

In the normalizing heat treatment, the hot-rolled steel sheet is maintained in a temperature section of 930°C to 1000°C for predetermined time and then cooled in the air. Here, a maintenance time may be preferably 40 to 60 minutes from a point in time at which a temperature of a central portion of the steel sheet reaches a target temperature.

At the time of normalizing heat treatment, when the temperature is less than 930°C or the maintenance time of the central portion of the steel sheet is shorter than 40 minutes, carbides formed during the cooling after rolling or impure elements segregated in grain boundaries are not smoothly solid-dissolved again, such that after heat treatment, low-temperature toughness of the steel material may be significantly deteriorated.

Further, refinement of the austenite grain may occur during the normalizing heat treatment process, which may cause deterioration of hardenability. Particularly, when the austenite grain size is 15µm or less, air-cooled bainite may not be formed, but ferrite and band shaped pearlite structures may be formed, such that hydrogen-induced cracking resistance may be deteriorated.

Therefore, in the present disclosure, the temperature at the time of normalizing heat treatment is limited to 930°C to 1000°C, and the maintenance time in this temperature range may be preferably 40 to 60 minutes after the temperature of the central portion of the steel sheet reaches the target temperature.

The manufacturing method may further include, multilayer-stacking and cooling the steel sheet, until a temperature of 200°C or more is cooled to room temperature, before the normalizing heat treatment process and after the finishing rolling, in a case in which an amount of dissolved hydrogen in molten steel is 1.3ppm or more in a manufacturing process for manufacturing the steel slab.

In a case of performing the multilayer-stacking and cooling of the steel sheet, hydrogen dissolved in the steel material is released, such that internal micro cracks by hydrogen may be more effective suppressed, such that hydrogen-induced cracking resistance may be finally improved.

### [Mode for Invention]

Hereinafter, the present disclosure will be described in detail through Inventive Examples.

However, the following Inventive Examples are provided only examples for describe the present disclosure in more detail, but the scope of the present disclosure is not limited thereby.

### (Inventive Example)

A hot-rolled steel sheet having a thickness of 6 to 25mm was manufactured by performing heating, sizing rolling, bar reheating, finish rolling, and normalizing heat treatment on a steel slab having a component composition illustrated in the following Table 1 under conditions illustrated in the following Table 2.

The following Table 3 illustrates measurement results of fractions of microstructures, fractions and sizes of precipitate phases in the hot-rolled steel sheets manufactured using the component compositions under the process conditions and evaluation results of tensile strength, impact toughness, and HIC resistance corresponding to main quality indices of the steel sheets.

In each of the manufactured hot-rolled steel sheets, fractions and average sizes of ferrite, air-cooled bainite, pearlite, and Nb (C,N) and V (C,N) precipitate phases in each of the manufactured hot-rolled steel sheets were measured, and physical properties (here, strength and toughness) and a hydrogen-induced cracking length ratio (CLR, %) and hydrogen-induced cracking area ratio (CAR, %) in a length direction of the sheet were measured and illustrated in the following Table 3.

Here, the hydrogen-induced cracking length ratio (LR, %) and the hydrogen-induced cracking area ratio (CAR, %) in the length direction of the sheet, used as indices of hydrogen-induced cracking (HIC) resistance of the steel sheet were calculated and evaluated by measuring a length and an area of a crack by an ultrasonic inspection method after dipping a test sample in H₂S-saturated 5 % NaCl + 0.5 % CH₃COOH solution (1 atm) for 96 hours according to NACE TM0284 corresponding to a related international standard, and dividing a sum of lengths and a sum of areas of cracks in a length direction of the test sample by an entire length and an entire area of the test sample, respectively.

Further, the fraction of the microstructure in the steel was quantitatively measured using an image analyzer after capturing an image using an optical microscope at magnification of 100x and 200x. In cases of micro precipitate phases, the fraction and the size (diameter) of the Nb(C,N) precipitate phase were measured through a carbon Extraction replica and transmission electron microscopy (TEM), and in the case of V(C,N), a crystalline structure of the precipitate phase was confirmed through TEM diffraction analysis, and distribution, the fraction, and the size thereof were measured by atom probe tomography (APM).

A tensile test was performed at room temperature, and impact toughness was evaluated by performing a Charpy-V-Notch impact test three times at -46°C and measuring an average value thereof.

**[Table 1]**

| Classification | Component Composition (wt%) | | | | | | | | | | | | | | |
|---|---|---|---|---|---|---|---|---|---|---|---|---|---|---|---|
| | C | Si | Mn | Al | P* | S* | Nb | V | Ti | Cr | Mo | Cu | Ni | Ca* | N* |
| Inventive Steel 1 | 0.15 | 0.30 | 1.20 | 0.03 1 | 80 | 10 | 0.012 | 0.015 | 0.01 2 | 0.05 | 0.07 | 0.13 | 0.25 | 13 | 37 |
| Inventive Steel 2 | 0.17 | 0.31 | 1.10 | 0.02 7 | 90 | 8 | 0.010 | 0.015 | 0.01 5 | 0.10 | 0.07 | 0.10 | 0.30 | 12 | 38 |
| Inventive Steel 3 | 0.11 | 0.25 | 1.21 | 0.03 3 | 70 | 6 | 0.007 | 0.025 | 0.01 4 | 0.07 | 0.10 | 0.17 | 0.31 | 20 | 37 |
| Inventive Steel 4 | 0.18 | 0.32 | 1.05 | 0.03 5 | 50 | 7 | 0.009 | 0.02 | 0.01 3 | 0.13 | 0.06 | 0.10 | 0.27 | 17 | 42 |
| Inventive Steel 5 | 0.16 | 0.36 | 1.03 | 0.03 6 | 60 | 9 | 0.016 | 0.15 | 0.01 5 | 0.15 | 0.07 | 0.16 | 0.36 | 15 | 45 |
| Comparative Steel 1 | 0.06 | 0.31 | 1.23 | 0.03 1 | 60 | 8 | 0.009 | 0.016 | 0.01 5 | 0.15 | 0.12 | 0.12 | 0.20 | 15 | 41 |
| Comparative Steel 2 | 0.16 | 0.33 | 0.41 | 0.03 0 | 80 | 10 | 0.012 | 0.012 | 0.01 3 | 0.05 | 0.96 | 0.19 | 0.22 | 16 | 50 |
| Comparative Steel 3 | 0.13 | 0.28 | 1.13 | 0.02 9 | 70 | 5 | 0.000 3 | 0.000 1 | 0.01 2 | 0.09 | 0.06 | 0.12 | 0.22 | 17 | 41 |
| Comparative Steel 4 | 0.14 | 0.35 | 1.10 | 0.03 3 | 80 | 5 | 0.010 | 0.012 | 0.01 7 | 0.00 8 | 0.00 2 | 0.11 | 0.23 | 15 | 38 |
| Comparative Steel 5 | 0.15 | 0.85 | 1.15 | 0.03 5 | 80 | 10 | 0.012 | 0.017 | 0.15 | 0.15 | 0.08 | 0.18 | 0.39 | 15 | 39 |
| Comparative Steel 6 | 0.17 | 0.33 | 1.00 | 0.02 5 | 90 | 10 | 0.019 | 0.007 | 0.01 ? | 0.08 | 0.05 | 0.73 | 0.18 | 17 | 41 |
| Comparative Steel 7 | 0.11 | 0.21 | 1.10 | 0.02 7 | 80 | 8 | 0.015 | 0.012 | 0.01 0. | 0.05 | 0.07 | 0.05 | 0.13 | 13 | 45 |
| Comparative Steel 8 | 0.13 | 0.29 | 1.00 | 0.03 5 | 60 | 7 | 0.012 | 0.013 | 0.01 2 | 0.02 | 0.05 | 0.07 | 0.18 | 17 | 51 |
| Comparative Steel 9 | 0.18 | 0.31 | 1.05 | 0.01 5 | 50 | 6 | 0.008 | 0.014 | 0.01 5 | 0.05 | 0.08 | 0.09 | 0.15 | 15 | 47 |
| Comparative Steel 10 | 0.17 | 0.35 | 1.25 | 0.02 5 | 80 | 8 | 0.010 | 0.009 | 0.01 7 | 0.03 | 0.06 | 0.06 | 0.13 | 20 | 50 |
| Comparative Steel 11 | 0.15 | 0.33 | 0.10 | 0.03 9 | 70 | 10 | 0.005 | 0.012 | 0.01 3 | 0.09 | 0.09 | 0.12 | 0.21 | 14 | 44 |

| | | | | | | | | | | | | | | | |
|---|---|---|---|---|---|---|---|---|---|---|---|---|---|---|---|
| (In Table 1, contents of P,S,Ca,and N are expressed by "ppm".) | | | | | | | | | | | | | | | |

**[Table 2]**

| Classification | | Sizing Rolling | | | Reheating | Finish Rolling | | Normalizing | | PWHT | | |
|---|---|---|---|---|---|---|---|---|---|---|---|---|
| | Heating Temperature of Slab | Rolling Termination Temperature | Thickness of Bar Altar Rolling | AGS After Rolling | Temperature of Bar | Rolling Termination Temperature-Recrystallization Temperature | Reduction Ratio (Thickness of Bar/ Thickness of Steel Sheet) | Heating Temperature | Maintenance Time | Heating Temperature | Maintenance Time | Cycle (Times) |
| | (°C) | (°C) | (nm) | (um) | (°C) | (°C) | | (°C) | (Min) | (°C) | (Mn) | |
| Inventive Steel 1 | 1155 | 1123 | 65 | 141 | 1158 | 55 | 5.4 | 945 | 45 | 625 | 180 | 1 |
| Inventive Steel 2 | 1160 | 1121 | 74 | 138 | 1163 | 52 | 5.7 | 950 | 46 | 623 | 181 | 2 |
| Inventive Steel 3 | 1162 | 1118 | 53 | 159 | 1175 | 62 | 2.1 | 960 | 48 | 621 | 189 | 1 |
| Inventive Steel 4 | 1157 | 1117 | 83 | 133 | 1161 | 53 | 6.4 | 959 | 46 | 618 | 182 | 1 |
| Inventive Steel 5 | 1172 | 1123 | 91 | 128 | 1182 | 48 | 5.7 | 970 | 49 | 639 | 181 | 2 |
| Comparative Steel 1 | U53 | 1122 | 103 | 120 | 1167 | 45 | 12.9 | 951 | 52 | 618 | 183 | 1 |
| Comparative Steel 2 | 1168 | 1122 | 68 | 149 | 1173 | 59 | 9.7 | 947 | 48 | 611 | 186 | 2 |
| Comparative Steel 3 | 1169 | 1119 | 88 | 133 | 1181 | 55 | 7.3 | 963 | 49 | 618 | 185 | 1 |
| Comparative Steel 4 | 1188 | 1113 | 95 | 118 | 1188 | 50 | 5.9 | 989 | 53 | 620 | 188 | 2 |
| comparative Steel 5 | 1158 | 1125 | 113 | 101 | 1173 | 43 | 5.7 | 945 | 55 | 618 | 182 | 2 |
| comparative Steel 6 | 1153 | 1127 | 83 | 121 | 1165 | 49 | 7.5 | 941 | 47 | 619 | 183 | 1 |
| Comparative Steel 7 | 1310 | 1122 | 89 | 128 | 1159 | 46 | 4.7 | 952 | 41 | 625 | 191 | 1 |
| Comparative Steel 8 | 1176 | 1123 | 159 | 164 | 1163 | 5 | 19.9 | 980 | 43 | 627 | 184 | 2 |
| Comparative Steel 9 | 1181 | 1129 | 117 | 101 | 1167 | -21 | 9.8 | 974 | 51 | 626 | 186 | 1 |
| Comparative Steel 10 | 1155 | 1115 | 81 | 129 | 1178 | 43 | 6.2 | 831 | 55 | 621 | 179 | 1 |
| Comparative Steel 11 | 1161 | 1126 | 77 | 137 | 1189 | 49 | 5.1 | 959 | 58 | 662 | 186 | 3 |

**[Table 3]**

| Classification | Fraction of Microstructure (%) | | | Precipitate Phase (After PWHT) | | | | Tensile Strength | | Impact Toughness | | Surface State | HIC | |
|---|---|---|---|---|---|---|---|---|---|---|---|---|---|---|
| | Ferrite | Pearlite | Air-cooled Balnite | Nb(C,N) | | V(C,N) | | Before PWHT | After PWHT | Before PWHT | After PWHT | | CLR (%) | CAR (%) |
| | | | | Fraction (wt%) | Size (nm) | fraction (wt%) | Size (nm) | | | | | | | |
| Inventive Steel 1 | 40.9 | 0.1 | 59.0 | 0.017 | 28 | 0.015 | 11 | 605 | 549 | 412 | 359 | Good | 0.0 | 0.0 |
| Inventive Steel 2 | 40.8 | 1.2 | 58.2 | 0.023 | 17 | 0.016 | 10 | 608 | 576 | 402 | 380 | Good | 0.0 | 0.0 |
| Inventive Steel 3 | 46.5 | 2.5 | 51.8 | 0.010 | 21 | 0.019 | 11 | 600 | 571 | 398 | 401 | Good | 0.1 | 0.0 |
| Inventive Steel 4 | 36.7 | 1.3 | 62.6 | 0.015 | 16 | 0.017 | 10 | 617 | 585 | 389 | 392 | Good | 0.0 | 0.2 |
| Inventive Steel 6 | 31.9 | 1.1 | 67.3 | 0.028 | 21 | 0.013 | 9 | 619 | 591 | 406 | 388 | Good | 0.0 | 0.0 |
| Comparative Steel 1 | 98.4 | 1.6 | 0 | 0.013 | 15 | 0.014 | 10 | 373 | 362 | 451 | 455 | Good | 0.0 | 0.0 |
| Comparative Steel 2 | 59.3 | 22.6 | 18.1 | 10.010 | 14 | 0.011 | 8 | 487 | 463 | 105 | 107 | Good | 13.0 | 9.0 |
| Comparative Steel 3 | 48.9 | 1.1 | 50 | - | - | - | - | 547 | 486 | 401 | 351 | Good | 0.0 | 0.5 |
| Comparative Steel 4 | 35.8 | 13.5 | 50.7 | 0.011 | 19 | 0.013 | 9 | 514 | 481 | 203 | 215 | Good | 5.4 | 10.3 |
| Comparative Steel 5 | 41.2 | 1.1 | 57.7 | 0.010 | 14 | 0.017 | 7 | 645 | 616 | 15 | 18 | Good | 17.5 | 20.6 |
| Comparative Steel 6 | 40.5 | 0.5 | 59 | 0.016 | 23 | 0.017 | 8 | 604 | 539 | 410 | 388 | Crack | 0.0 | 0.1 |
| Comparative Steel 7 | 41.6 | 0.4 | 58 | 0.017 | 23 | 0.015 | 10 | 600 | 571 | 379 | 388 | Crack | 0.1 | 0.3 |
| Comparative Steel 8 | 66.2 | 30.1 | 3.7 | 0.015 | 23 | 0.018 | 9 | 619 | 601 | 132 | 150 | Good | 20.5 | 18.1 |
| Comparative Steel 9 | 65.0 | 29.8 | 5.2 | 0.013 | 20 | 0.019 | 11 | 622 | 608 | 200 | 175 | Good | 15.5 | 23.7 |
| Comparative Stell 10 | 70.8 | 26.5 | 2.7 | 0.016 | 22 | 0.011 | 7 | 597 | 583 | 231 | 252 | Good | 13.1 | 15.6 |
| Comparative Steel 11 | 40.8 | 1.0 | 58.2 | 0.035 | 52 | 0.020 | 14 | 590.7 | 492.2 | 308 | 65.7 | Good | 0.0 | 0.0 |

As illustrated in Table 1, in Comparative Steel 1 in which a content of carbon (C) was limited to be less than 0.10% corresponding to a lower limit value of the content range of carbon suggested in the present disclosure, it may be appreciated that air-cooled bainite was not formed due to deterioration of hardenability, and since a structure of a matrix phase after normalizing was mostly composed of ferrite, Comparative Steel 1 has a low tensile strength value of about 370MPa even in an as-normalized state as well as after PWH.

In Comparative Steel 2 in which a content of Mn was less than 1.0% corresponding to a lower limit value of the content of Mn in the present disclosure, it may be appreciated that as a matrix phase was composed of ferrite corresponding to a structure of a general thin sheet and band-shaped pearlite, tensile strength did not exceed 500MPa corresponding to a lower limit value to be required in the present disclosure, and hydrogen-induced cracking resistance was also not satisfactory (CLR was 13% and CAR was about 9%).

In Comparative Steel 3 in which contents of Nb and V were less than 0.001 corresponding to lower limit values of the content of Nb and V in the present disclosure, it may be appreciated that as ferrite and air-cooled bainite were formed, values of strength, toughness, and hydrogen-induced cracking resistance were all satisfactory. However, it may be appreciated that since fractions of Nb(C,N) and V(C,N) carbonitrides were low, after PWHT heat treatment, a decrease in strength was increased, such that strength did not exceed 500MPa corresponding to a lower limit value required in the present disclosure.

In Comparative Steel 4 in which contents of Cr and Mo were less than lower limit values of the contents of Cr and Mo in the present disclosure, it may be appreciated that a solid-solution strengthening degree of ferrite by Mo and Cr was decreased, and thus strength after PWHT did not exceed 500MPa corresponding to a lower limit value required in the present disclosure. Further, it may be appreciated that as a fraction of air-cooled bainite was deceased by about 10% as compared to Inventive Steel due to deterioration of hardenability and a fraction of band-shaped pearlite structure was increased, hydrogen-induced cracking resistance was also decreased.

In Comparative Steel 5 in which a content of Si was more than 0.5% corresponding to an upper limit value of the content of Si in the present disclosure, it may be appreciated that a solid solution strengthening degree of a ferrite phase was significantly due to a high content of Si, a tensile strength value before and after PWHT was significantly high due to a martensite-austenite (MA) phase formed during air-cooling, and impact toughness evaluated at -46°C was also significantly low due to brittleness fracture. It may be appreciated that hydrogen-induced cracking resistance was also deteriorated due to formation of MA.

In Comparative Steel 6 in which a content of Cu was more than 0.5% corresponding to an upper limit value of the content of Cu in the present disclosure, it may be appreciated that a solid solution strengthening degree of ferrite was increased by Cu and thus a tensile strength value was slightly increased as compared to Inventive Steel, but tensile strength before and after PWHT satisfied levels to be required in the present disclosure. Further, it may be appreciated that impact toughness was also excellent without a large difference, but star cracks occurred on a surface, such that there was a problem in surface quality.

In Comparative Steel 7 in which a heating temperature of a slab was controlled to be higher than 1300°C corresponding to an upper limit value of the heating temperature of the slab in the present disclosure, it may be appreciated that even though strength, toughness and hydrogen-induced cracking resistance were all satisfactory, but a high-temperature oxidation scale was excessively generated, such that there was a problem in surface quality.

In Comparative Steel 8 in which at the time of sizing rolling, a thickness of a bar was controlled to be more than 120mm corresponding to an upper limit value of the thickness of the bar in the present disclosure, the number of rolling pass in the finish rolling process was increased due to lack of a sizing rolling reduction amount, and thus, a rolling termination temperature was decreased. It may be appreciated that as a rolling reduction ratio was also increased, after finish rolling, an austenite grain size was decreased, and as a result, air-cooled bainite was not formed in the normalizing. As a result, it may be appreciated that a microstructure was composed of general ferrite and band-shaped pearlite, and hydrogen-induced cracking resistance was deteriorated.

In Comparative Steel 9 in which a finish rolling temperature was less than a recrystallization temperature + 20°C, corresponding to a lower limit range suggested in the present disclosure, after the rolling was terminated, refinement of an austenite grain occurred. As a result, hardenability in the air-cooling process after normalizing was decreased, such that the steel sheet had a microstructure composed of general ferrite and band-shaped pearlite. It may be appreciate that as a result, tensile strength, impact toughness, and the like, were excellent, but hydrogen-induced cracking resistance corresponding to a key point of quality in the present disclosure was significantly deteriorated.

In Comparative Steel 10 in which a normalizing temperature was controlled to be less than 930°C corresponding to a lower limit range of the temperature suggested in the present disclosure, it may be appreciated that after the rolling was terminated, hardenability was secured due to a sufficiently large austenite grain, but during inverse transformation of rolling phases due to low-temperature heating, the austenite grain as decreased again. As a result, tensile strength, impact toughness, and the like, were satisfactory, but an amount of air-cooled bainite was small, and a band index of pearlite was high, such that hydrogen-induced cracking resistance was not satisfactory.

In Comparative Steel 11 in which although ranges of the heating temperature and the maintenance time of PWHT were not limited in the present disclosure, a heating temperature and a maintenance time of PWHT were significantly large as compared to Inventive Steel, it may be appreciated that contents of air-cooled bainite and precipitates were similar to those in Inventive Steel, but as the steel sheet was exposed to a high temperature for a long period of time, an average diameter of precipitate phases, particularly, Nb(C,N) carbonitrides was increased two times or more as compared to Inventive Steel, such that it was impossible to suitably control decrease in strength due to recrystallization of bainite and dislocation recovery in the PWHT process, and as a result, after PWHT, strength was significantly deteriorated.

On the contrary, in Inventive Steels 1 to 5 satisfying component ranges and manufacturing ranges in the present disclosure, it may be appreciated that a ratio of air-cooled bainite in the microstructure was 40% or more, the fraction of Nb(C,N) and V(C,N) carbonitrides was 0.01% or more, a lower limit value of tensile strength before and after PWHT was 500MPa or more, a surface state was satisfactory, and at the time of evaluating hydrogen-induced cracking resistance, CLR and CAR were all excellent (5% or less).

FIG. 1 illustrates a photograph obtained by observing a central portion of Inventive Steel 3 in a thickness direction using an optical microscope. As illustrated in FIG. 1, it may be appreciated that a microstructure in the central portion was composed of about 60% of air-cooled bainite structure together with about 40% of ferrite (polygonal ferrite).

Although the present disclosure have been disclosed with reference to Examples, those skilled in the art will appreciate that various modifications, additions and substitutions are possible, without departing from the scope of the invention as disclosed in the accompanying claims.

## Claims

1. A steel material for a pressure vessel having excellent hydrogen-induced cracking (HIC) resistance, the steel material comprising, by wt%:
0.10 to 0.25% of carbon (C); 0.05 to 0.50% of silicon (Si) ; 1.0 to 2.0% of manganese (Mn); 0.005 to 0.1% of aluminum (Al); 0.010% or less of phosphorous (P); 0.0015% or less of sulfur (S); 30 to 70 ppm of nitrogen (N); 0.001 to 0.03% of titanium (Ti); 0.02 to 0.50% of copper (Cu); 0.05 to 0.50% of nickel (Ni); 0.0005 to 0.0040% of calcium (Ca); 0.001 to 0.03% of niobium (Nb); 0.001 to 0.03% of vanadium (V); one or two of 0.01 to 0.20% of chromium (Cr) and 0.05 to 0.15% of molybdenum (Mo); optionally 0.0001 to 0.0020% of B; and the balance being Fe and other unavoidable impurities,
wherein a microstructure of the steel material contains at least 40 vol% of upper bainite and granular bainite and the balance being ferrite, and Nb(C,N) carbonitrides having a diameter of 5 to 30 nm are contained in the steel material in a content of 0.01 wt% or more, and
wherein in the microstructure of the steel material, ferrite is partially replaced with pearlite,
wherein the fraction and diameter of the Nb(C,N) carbonitrides are measured through a carbon Extraction replica and transmission electron microscopy.

2. The steel material of claim 1, wherein a content of Nb (C, N) carbonitrides having a diameter of 5 to 30nm is 0.01 to 0.02 wt%.

3. The steel material of claim 1, wherein the pearlite contains 3 wt% or less of spheroidized cementite.

4. The steel material of claim 1 or 2, wherein a thickness of the steel material is 5mm or more to 25mm or less.

5. A manufacturing method for a steel material for a pressure vessel having excellent hydrogen-induced cracking (HIC) resistance, the manufacturing method comprising:
reheating a slab comprising, by wt%, 0.10 to 0.25% of carbon (C), 0.05 to 0.50% of silicon (Si), 1.0 to 2.0% of manganese (Mn), 0.005 to 0.1% of aluminum (Al), 0.010% or less of phosphorous (P), 0. 0015% or less of sulfur (S), 30 to 70 ppm of nitrogen (N), 0.001 to 0.03% of titanium (Ti), 0.02 to 0.50% of copper (Cu), 0.05 to 0.50% of nickel (Ni), 0.0005 to 0.0040% of calcium (Ca), 0.001 to 0.03% of niobium (Nb), 0.001 to 0.03% of vanadium (V), one or two of 0.01 to 0.20% of chromium (Cr) and 0.05 to 0.15% of molybdenum (Mo), optionally 0.0001 to 0.0020% of B and the balance being Fe and other unavoidable impurities at 1150°C to 1300°C;
sizing-rolling the reheated slab at 1100°C to 1130°C to obtain a bar having a thickness of 40 to 120mm;
air-cooling the obtained bar to room temperature after the sizing rolling;
heating the bar again at 1150°C to 1200°C after the air-cooling;
finish hot-rolling the heated bar at 1000°C to 1050°C to form a hot-rolled steel sheet having a thickness of 5 to 25mm;
air-cooling the hot-rolled steel sheet to room temperature after the finish hot-rolling; and
a normalizing heat treatment process of heating the hot-rolled steel sheet at 930°C to 1000°C for 40 to 60 minutes after the air-cooling and then air-cooling the heated hot-rolled steel sheet to room temperature.

6. The manufacturing method of claim 5, wherein after the sizing rolling, an austenite grain size is 100µm or more.

7. The manufacturing method of claim 5, wherein a finish rolling termination temperature is equal to or higher than a recrystallization temperature + 20°C.

8. The manufacturing method of claim 5, wherein at the time of finish rolling a rolling reduction ratio is set so that a ratio between a thickness (mm) of the slab and a thickness of the steel sheet after finish rolling is 20 or less.

9. The manufacturing method of claim 5, wherein during the normalizing heat treatment process the steel sheet is air-cooled at 0.1°C to 5°C/s based on a central portion of thereof.

10. The manufacturing method of claim 5 further comprising multilayer-stacking and cooling the steel sheet from a temperature of 200°C or more to room temperature, before the normalizing heat treatment process and after the finishing rolling, in a case in which an amount of dissolved hydrogen in molten steel is 1.3ppm or more in a manufacturing process for manufacturing the steel slab.

11. The manufacturing method of claim 5 wherein during the time of performing secondary heat treatment on the steel material, 0.01 wt% or more of V(C,N) carbonitrides having a diameter of 5 to 30mm are formed.

12. The manufacturing method of claim 11 wherein a content of the V(C,N) carbonitrides having a diameter of 5 to 30nm is 0.01 to 0.02 wt%.

## Patentansprüche

1. Stahlmaterial für einen Druckbehälter mit hervorragender Beständigkeit gegen wasserstoffinduzierte Rissbildung *(hydrogen-induced cracking* - HIC), wobei das Stahlmaterial in Gew.-% umfasst:
0,10 bis 0,25 % Kohlenstoff (C);
0,05 bis 0,50 % Silizium (Si);
1,0 bis 2,0 % Mangan (Mn);
0,005 bis 0,1 % Aluminium (AI);
0,010 % oder weniger Phosphor (P);
0,0015 % oder weniger Schwefel (S);
30 bis 70 ppm Stickstoff (N);
0,001 bis 0,03% Titan (Ti);
0,02 bis 0,50 % Kupfer (Cu);
0,05 bis 0,50 % Nickel (Ni);
0,0005 bis 0,0040 % Calcium (Ca);
0,001 bis 0,03 % Niob (Nb);
0,001 bis 0,03 % Vanadium (V);
ein oder zwei von 0,01 bis 0,20 % Chrom (Cr) und 0,05 bis 0,15 % Molybdän (Mo);
optional 0,0001 bis 0,0020 % B; und
wobei der Rest Fe und andere unvermeidbare Verunreinigungen sind, wobei eine Mikrostruktur des Stahlmaterials mindestens 40 Vol.-% oberen Bainit und körnigen Bainit enthält und der Rest Ferrit ist, und Nb(C,N)-Carbonitride mit einem Durchmesser von 5 bis 30 nm in dem Stahlmaterial in einem Gehalt von 0, 01 Gew.-% oder mehr enthalten sind, und wobei in der Mikrostruktur des Stahlmaterials Ferrit teilweise durch Perlit ersetzt ist, wobei der Anteil und der Durchmesser der Nb(C,N)-Carbonitride durch eine Kohlenstoff-Extraktionsreplik und Transmissionselektronenmikroskopie gemessen werden.

2. Stahlmaterial nach Anspruch 1, wobei ein Gehalt an Nb(C,N)-Carbonitriden mit einem Durchmesser von 5 bis 30 nm 0,01 bis 0,02 Gew.-% beträgt.

3. Stahlmaterial nach Anspruch 1, wobei der Perlit 3 Gew.-% oder weniger an sphäroidisiertem Zementit enthält.

4. Stahlmaterial nach Anspruch 1 oder 2, wobei eine Dicke des Stahlmaterials 5 mm oder mehr bis 25 mm oder weniger beträgt.

5. Verfahren zum Herstellen eines Stahlmaterials für einen Druckbehälter mit hervorragender Beständigkeit gegen wasserstoffinduzierte Rissbildung (HIC), wobei das Verfahren umfasst:
Wiedererhitzen einer Bramme, umfassend, in Gew.-%, 0,10 bis 0.25 % Kohlenstoff (C), 0,05 bis 0,50 % Silizium (Si), 1,0 bis 2,0 % Mangan (Mn), 0,005 bis 0,1 % Aluminium (AI), 0,010% oder weniger Phosphor (P), 0,0015 % oder weniger Schwefel (S), 30 bis 70 ppm Stickstoff (N), 0,001 bis 0,03 % Titan (Ti), 0,02 bis 0,50 % Kupfer (Cu), 0,05 bis 0,50 % Nickel (Ni), 0,0005 bis 0,0040 % Calcium (Ca), 0,001 bis 0,03 % Niob (Nb), 0,001 bis 0,03 % Vanadium (V), ein oder zwei von 0,01 bis 0,20 % Chrom (Cr) und 0,05 bis 0,15 % Molybdän (Mo), optional 0,0001 bis 0,0020 % B und als Rest Fe und andere unvermeidbare Verunreinigungen bei 1150 °C bis 1300 °C;
Kalibrierwalzen der wiedererhitzten Bramme bei 1100 °C bis 1130 °C, um einen Stab mit einer Dicke von 40 bis 120 mm zu erhalten;
Luftkühlen des erhaltenen Stabes auf Raumtemperatur nach dem Kalibrierwalzen;
Erhitzen des Stabes erneut auf 1150 °C bis 1200 °C nach dem Luftkühlen;
Fertigwarmwalzen des erhitzten Stabes bei 1000 °C bis 1050 °C, um ein warmgewalztes Stahlblech mit einer Dicke von 5 bis 25 mm zu bilden;
Luftkühlen des warmgewalzten Stahlblechs auf Raumtemperatur nach dem Fertigwarmwalzen; und
einen Normalisierungswärmebehandlungsprozess des Erhitzens des warmgewalzten Stahlblechs bei 930 °C bis 1000 °C für 40 bis 60 Minuten nach dem Luftkühlen und dann Luftkühlen des erhitzten warmgewalzten Stahlblechs auf Raumtemperatur.

6. Herstellungsverfahren nach Anspruch 5, wobei nach dem Kalibrierwalzen eine Austenitkorngröße 100 µm oder mehr beträgt.

7. Herstellungsverfahren nach Anspruch 5, wobei eine Fertigwalzendtemperatur gleich oder höher als eine Rekristallisationstemperatur + 20 °C ist.

8. Herstellungsverfahren nach Anspruch 5, wobei zum Zeitpunkt des Fertigwalzens ein Walzreduktionsverhältnis so eingestellt wird, dass ein Verhältnis zwischen einer Dicke (mm) der Bramme und einer Dicke des Stahlblechs nach dem Fertigwalzen 20 oder weniger beträgt.

9. Herstellungsverfahren nach Anspruch 5, wobei während des Normalisierungswärmebehandlungsprozesses das Stahlblech basierend auf einem mittleren Abschnitt desselben mit 0,1 °C bis 5 °C/s luftgekühlt wird.

10. Herstellungsverfahren nach Anspruch 5, ferner umfassend das mehrlagige Stapeln und Abkühlen des Stahlblechs von einer Temperatur von 200 °C oder mehr auf Raumtemperatur, vor dem Normalisierungswärmebehandlungsprozess und nach dem Fertigwalzen, in einem Fall, bei dem eine Menge an gelöstem Wasserstoff in geschmolzenem Stahl 1,3 ppm oder mehr beträgt in einem Prozess zum Herstellen der Stahlbramme.

11. Herstellungsverfahren nach Anspruch 5, wobei während des Zeitpunkts des Durchführens einer sekundären Wärmebehandlung an dem Stahlmaterial 0,01 Gew.-% oder mehr V(C,N)-Carbonitride mit einem Durchmesser von 5 bis 30 mm gebildet werden.

12. Herstellungsverfahren nach Anspruch 11, wobei ein Gehalt der V(C,N)-Carbonitride mit einem Durchmesser von 5 bis 30 nm 0,01 bis 0,02 Gew.-% beträgt.

## Revendications

1. Matériau en acier destiné à un récipient sous pression présentant une excellente résistance à la fissuration induite par l'hydrogène (HIC), le matériau en acier comprenant en % en poids :
0,10 à 0,25 % de carbone (C) ;
0,05 à 0,50 % de silicium (Si) ;
1,0 à 2,0 % de manganèse (Mn) ;
0,005 à 0,1 % d'aluminium (Al) ;
0,010 % ou moins de phosphore (P) ;
0,0015 % ou moins de soufre (S) ;
30 à 70 ppm d'azote (N) ;
0,001 à 0,03 % de titane (Ti) ;
0,02 à 0,50 % de cuivre (Cu) ;
0,05 à 0,50 % de nickel (Ni) ;
0,0005 à 0,0040 % de calcium (Ca) ;
0,001 à 0,03 % de niobium (Nb) ;
0,001 à 0,03 % de vanadium (V) ;
un ou les deux parmi 0,01 à 0,20 % de chrome (Cr) et 0,05 à 0,15 % de molybdène (Mo) ;
éventuellement 0,0001 à 0,0020 % de B ; et
le reste étant le Fe et d'autres impuretés inévitables, une microstructure du matériau en acier contenant au moins 40 % en volume de bainite supérieure et de bainite granulaire, le reste étant la ferrite et des carbonitrures de Nb (C, N) présentant un diamètre de 5 à 30 nm étant contenues dans le matériau en acier en une teneur de 0,01 % en poids ou plus et dans la microstructure du matériau en acier, la ferrite étant partiellement remplacée par la perlite, la fraction et le diamètre des carbonitrures de Nb (C, N) étant mesurés au moyen d'une réplique d'extraction de carbone et de la microscopie électronique à transmission.

2. Matériau en acier selon la revendication 1, dans lequel une teneur en carbonitrures de Nb(C, N) présentant un diamètre de 5 à 30 nm est de 0,01 à 0,02 % en poids.

3. Matériau en acier selon la revendication 1, dans lequel la perlite contient 3 % en poids ou moins de cémentite sphéroïdisée.

4. Matériau en acier selon la revendication 1 ou 2, dans lequel une épaisseur du matériau en acier est comprise entre 5 mm ou plus et 25 mm ou moins.

5. Procédé de fabrication d'un matériau en acier destiné à un récipient sous pression présentant une excellente résistance à la fissuration induite par l'hydrogène (HIC), le procédé de fabrication comprenant :
le réchauffement d'une brame comprenant, en % en poids, 0,10 à 0,25% de carbone (C), 0,05 à 0,50 % de silicium (Si), 1,0 à 2,0 % de manganèse (Mn), 0,005 à 0,1 % d'aluminium (Al), 0,010 % ou moins de phosphore (P), 0,0015 % ou moins de soufre (S), 30 à 70 ppm d'azote (N), 0,001 à 0,03 % de titane (Ti), 0,02 à 0,50 % de cuivre (Cu), 0,05 à 0,50 % de nickel (Ni), 0,0005 à 0,0040 % de calcium (Ca), 0,001 à 0,03 % de niobium (Nb), 0,001 à 0,03 % de vanadium (V), un ou les deux parmi 0,01 à 0,20 % de chrome (Cr) et 0,05 à 0,15 % de molybdène (Mo), éventuellement 0,0001 à 0,0020 % de B et le reste étant le Fe et d'autres impuretés inévitables entre 1 150 et 1 300 °C ;
le laminage-calibrage de la brame réchauffée à une température de 1 100 °C à 1 130 °C pour obtenir une barre présentant une épaisseur de 40 à 120 mm ;
le refroidissement à l'air de la barre obtenue à température ambiante après le laminage-calibrage ;
le chauffage à nouveau de la barre entre 1 150 et 1 200 °C après le refroidissement à l'air ;
la finition du laminage à chaud de la barre chauffée à une température de 1 000 à 1 050 °C pour former une tôle d'acier laminée à chaud présentant une épaisseur de 5 à 25mm;
le refroidissement à l'air de la tôle d'acier laminée à chaud à température ambiante après le laminage à chaud de finition ; et
un processus de traitement thermique de normalisation consistant à chauffer la tôle d'acier laminée à chaud à une température de 930 à 1 000 °C pendant 40 à 60 minutes après le refroidissement à l'air, puis à refroidir à l'air la tôle d'acier laminée à chaud chauffée à température ambiante.

6. Procédé de fabrication selon la revendication 5, dans lequel, après le laminage-calibrage, une taille de grain d'austénite est de 100 µm ou plus.

7. Procédé de fabrication selon la revendication 5, dans lequel une température de terminaison du laminage de finition est égale ou supérieure à une température de recristallisation +20 °C.

8. Procédé de fabrication selon la revendication 5, dans lequel, au moment du laminage de finition, un rapport de réduction de laminage est défini de manière à ce qu'un rapport entre une épaisseur (mm) de la brame et une épaisseur de la tôle d'acier après laminage de finition soit inférieur ou égal à 20.

9. Procédé de fabrication selon la revendication 5, dans lequel, pendant le processus de traitement thermique de normalisation, la tôle d'acier est refroidie à l'air entre 0,1 et 5 °C/s basée sur une partie centrale de celle-ci.

10. Procédé de fabrication selon la revendication 5, comprenant en outre l'empilement multicouche et le refroidissement de la tôle d'acier depuis une température de 200 °C ou plus à la température ambiante, avant le processus de traitement thermique de normalisation et après le laminage de finition, dans le cas où une quantité de l'hydrogène dissous dans l'acier en fusion est de 1,3 ppm ou plus dans un procédé de fabrication destiné à la fabrication de la brame d'acier.

11. Procédé de fabrication selon la revendication 5, dans lequel, pendant le temps de réalisation du traitement thermique secondaire du matériau en acier, 0,01 % en poids ou plus de carbonitrures de V (C, N) présentant un diamètre de 5 à 30 mm sont formés.

12. Procédé de fabrication selon la revendication 11, dans lequel une teneur en carbonitrures de V (C, N) présentant un diamètre de 5 à 30 nm est de 0,01 à 0,02 % en poids.
